# EUROPÄISCHE PATENTSCHRIFT

(11) **EP 1 518 361 B1**
(45) Veröffentlichungstag und Bekanntmachung des Hinweises auf die Patenterteilung: **28.12.2005**
(21) Anmeldenummer: 03735136.8
(22) Anmeldetag: 02.06.2003
(51) Int. Cl.: H04L 12/28, H04L 12/56, G08C 17/02

(54) **VERFAHREN ZUR FESTLEGUNG EINES OPTIMALEN ÜBERTRAGUNGSPFADES IN EINEM DATENNETZWERK**
METHOD FOR DETERMINING AN OPTIMAL TRANSMISSION PATH IN A DATA NETWORK
PROCEDE DE FIXATION D'UN CHEMIN DE TRANSMISSION OPTIMAL DANS UN RESEAU DE TRANSMISSION DE DONNEES

(30) Priorität: 18.06.2002 AT 9152002
(43) Veröffentlichungstag der Anmeldung: 30.03.2005
(73) Patentinhaber: ATB Automatisierungstechnik GmbH & Co KG, 4210 Gallneukirchen (AT)
(72) Erfinder: SCHÖNLEITNER, Arnold, A-1130 Wien (AT); EDTMAIR, Joachim, A-4210 Gallneukirchen (AT); BERNHARD, Wolfgang, A-4210 Gallneukirchen (AT); SCHEDLBERGER, Robert, A-4283 Bad Zell (AT)
(74) Vertreter: Gibler, Ferdinand
(86) Internationale Anmeldenummer: PCT/AT2003/000161
(87) Internationale Veröffentlichungsnummer: WO 2003/107592

(56) Entgegenhaltungen:
- WO-A-95/11561
- WO-A-98/56140
- DE-A- 19 946 017
- DUBE R ET AL: "SIGNAL STABILITY-BASED ADAPTIVE ROUTING (SSA) FOR AD HOC MOBILE NETWORKS" IEEE PERSONAL COMMUNICATIONS, IEEE COMMUNICATIONS SOCIETY, US, Bd. 4, Nr. 1, 1. Februar 1997 (1997-02-01), Seiten 36-45, XP000679252 ISSN: 1070-9916
- PERKINS C E ET AL: "Cd-hoc On-Deman Distance Vector Routing" PROCEEDINGS WMCSA, XX, XX, 25. Februar 1999 (1999-02-25), Seiten 90-100, XP002173721

## Beschreibung

Die Erfindung betrifft ein Verfahren zur Festlegung eines optimalen Übertragungspfades in einem Datennetzwerk, in welchem die Netzwerkteilnehmer Daten drahtlos, vorzugsweise über Funk, entlang einer Vielzahl von Übertragungsstrecken untereinander austauschen, wobei jedem Netzwerkteilnehmer eine eindeutige Kennzeichnung, wie z.B. eine Seriennummer zugewiesen ist und jeder Netzwerkteilnehmer sowohl Sende- als auch Empfangsfunktion aufweist, wobei eine vorbestimmte Anzahl von Netzwerkteilnehmern einen Speicher zum Abspeichern der Kennzeichnungen jener anderer Netzwerkteilnehmer, deren Signale weiter zu senden sind, aufweist, welche Netzwerkteilnehmer damit als Stationen von Übertragungspfaden verwendbar sind. Eine solche Anordnung ist aus WO 95/11561 bekannt.

Funk-Datennetzwerke der eingangs erwähnten Art können beispielsweise sein: Elektroinstallationen in Gebäuden, bei welchen jeder Verbraucher wie z.B. Lampe, Lüftungsmotor, Jalousienmotor od. dgl. einen Funkempfänger aufweist und jedes Bediengerät wie z.B. Schalter, Taster, Treppenhausautomat od. dgl. einen Funksender aufweist. Bei Betätigung eines Bediengerätes sendet dieses einen Befehl an den ihm zugeordneten Verbraucher, welcher diesem Befehl entsprechend seinen Zustand ändert, d.h. ein- oder ausschaltet, seine Drehzahl, seine Leuchtstärke od. dgl. verändert.

Weiters können die Sensoren und Aktoren einer Fertigungsanlage in der Industrie, eines Zutrittskontrollsystems oder die Spielautomaten eines Casinos, die Übungsgeräte eines Fitneßstudios od. dgl. in Form eines auf Datenübertragung per Funk basierenden Netzwerkes miteinander verbunden sein.

Unterschiedlich zu einem Computernetzwerk, wo jeder Computer mit jedem anderen z.B. mittels einer Ringleitung verbunden ist und daher jeder Computer zu jedem anderen Daten übertragen kann, gibt es bei den erwähnten Funk-Netzwerken bestimmte Übertragungsstrecken: Beispielsweise wird die Lampe im Wohnzimmer nur mit den beiden im Wohnzimmer befindlichen Schalter betätigt, es müssen daher besagte Schalter nur zur Wohnzimmerlampe, sonst aber zu keinem anderen Netzwerkteilnehmer Daten übertragen.

Die Zuordnung der einzelnen Komponenten zueinander, d.h. die Festlegung, welche Empfängerbaugruppe die Daten welchen Senders weiterverarbeiten und eine entsprechende Schalthandlung auslösen darf, kann fest in die Komponenten einprogrammiert sein. Es ergibt sich dabei ein sog. "Plug and Play"-System, es ist keine gesonderte Konfiguration oder Programmierung der Netzwerkteilnehmer bei der Inbetriebnahme des Netzwerkes nötig. Dieses System könnte beispielsweise bei der besprochenen Gebäude-Elektroinstallation eingesetzt werden.

Es kann aber auch vorgesehen sein, besagte Zuordnung durch den Anlagenbetreiber bzw. den Anlagenhersteller programmierbar zu halten, wofür die Empfangsbaugruppen der einzelnen Netzwerkteilnehmer so einstellbar sind, daß sie nur bestimmte der empfangenen Signale an die ihnen nachgeschalteten Verbraucher, wie z.B. Lampe, weitergeben.

Sind die beiden Endpunkte solcher Übertragungsstrecken in kleinen, mit der Reichweite der eingesetzten Funksignale überbrückbaren räumlichen Abständen zueinander angeordnet, werden außer besagten Endpunkten (Schalter und Lampe) keine weiteren Netzwerkkomponenten mehr benötigt. Bei größeren räumlichen Abständen der Endpunkte der Übertragungsstrecke müssen nach bisher bekanntem Stand der Technik entweder entsprechend leistungsstarke Sendebaugruppen oder zwischen den Endpunkten befindliche Verstärkerstationen eingesetzt werden.

In der **AT-B408 048** wird ein Netzwerkteilnehmer beschrieben, der einen Speicher zum Abspeichern zumindest der Kennzeichnungen, vorzugsweise weiters der Empfangsfeldstärken, der in Empfangsreichweite befindlichen anderen, zumindest Sendefunktion aufweisenden Netzwerkteilnehmern und zum Abspeichern der Kennzeichnungen jener anderer Netzwerkteilnehmer, deren Signale weiterzusenden sind. Ein solcher Netzwerkteilnehmer kann neben seiner eigentlichen Funktion, z.B. Lampe bzw. Schalter in einer Elektroinstallation, gleichzeitig als Verstärkerstation zur Weitervermittlung von Funkdaten, die nicht ihn selbst betreffen, eingesetzt werden. Beispielsweise bedeutet dies für eine eingangs angeführte auf Funk-Datenübertragung basierende Elektro-Installation: Sind beispielsweise sowohl der Schalter für die Beleuchtung als auch der Schalter für die Jalousie eines Raumes an der ersten Wand dieses Raumes, die Beleuchtung in der Mitte und die Jalousie an der gegenüberliegenden Wand dieses Raumes angeordnet, so können Sende- und Empfangsbaugruppe der Beleuchtung zur Weitervermittlung der Daten des Jalousieschalters zum Jalousiemotor verwendet werden, wofür ansonsten ein etwa bei der Beleuchtung sitzender Verstärker verwendet werden müßte, weil die Reichweite der Funksignale eben nur die Hälfte des Raumes beträgt.

Die Möglichkeit, im Netzwerkteilnehmer abzuspeichem, die Signale welcher anderer Netzwerkteilnehmer weiterzusenden sind, führt dazu, daß der erfindungsgemäße Netzwerkteilnehmer nicht sämtliche empfangenen Signale wieder aussenden muß, sondern sich auf genau jene Signale beschränken kann, die notwendigerweise wieder ausgesandt werden müssen, damit sie ihren Empfänger erreichen. Der gesamte Funkverkehr im Datennetzwerk kann damit auf das für die Funktion unbedingt erforderliche Ausmaß reduziert werden. Separate, zu den ohnehin vorhandenen Netzwerkteilnehmern hinzuzufügende Verstärkerstationen können beim Einsatz eines derartigen Netzwerkteilnehmers eingespart werden.

In der **AT-B-408 048** wird weiters ein gattungsgemäßes Verfahren zur Festlegung von Übertragungspfaden in einem Funk-Datennetzwerk, welches eben erläuterte Netzwerkteilnehmer enthält, beschrieben. Dieses läuft so ab, daß jene Netzwerkteilnehmer, die Sendefunktion aufweisen, ein ihre Kennzeichnung enthaltendes Testsignal aussenden. Dieses Testsignal wird von in Reichweite befindlichen anderen Netzwerkteilnehmern empfangen und speichern diese die empfangene Kennzeichnung zusammen mit der von ihnen gemessenen Empfangsfeldstärke ab. Anhand dieser gespeicherten Informationen (Kennzeichnungen und Empfangsfeldstärke der in Reichweite jedes Netzwerkteilnehmers liegenden anderen Netzwerkteilnehmer) wird nun für jede Übertragungsstrecke ein insbesondere hinsichtlich der Anzahl von Stationen und bestmöglicher Verbindung dieser Stationen untereinander optimaler Übertragungspfad ermittelt.

Für diese Ermittlung wird gemäß der gesamten Lehre der **AT-B-408 048** ein zusätzliches, von den Netzwerkteilnehmern separat ausgeführtes Konfigurationsgerät verwendet (vgl. Fig.4 der **AT-B-408 048** i.V.m. Seite 4, Zeilen 54,55 und Seite 8, Zeile 11 bis Seite 9, Zeile 20). Es wird zwar erläutert, daß ein derartiges Konfigurationsgerät entbehrlich sei, die Ermittlung der optimalen Übertragungspfade muß dann jedoch händisch, d.h. von einem entsprechend ausgebildeten Techniker, vorgenommen werden (vgl. Seite 8, Zeilen 5-10).

Nach abgeschlossener Ermittlung der optimalen Übertragungspfade muß jeder einzelne Netzwerkteilnehmer programmiert werden, d.h. es muß in irgendeiner Form in ihm eingespeichert werden, die Sendungen welcher anderen Netzwerkteilnehmer er als Router weiter zu senden hat. Dieser zweite Konfigurations-Schritt kann ebenfalls vom Konfigurationgsgerät gesetzt werden (vgl. Seite 9, Zeilen 2,3), sollte ein solches nicht vorhanden sein, muß die erläuterte Programmierung wieder händisch von einem Techniker durchgeführt werden.

Nachteilig ist beim in der **AT-B-408 048** beschriebenen Verfahren zur Festlegung von optimalen Übertragungspfaden das zusätzliche Konfigurationsgerät bzw. die Notwendigkeit der anderweitigen -insbesondere händischen- Durchführung der von diesem Gerät gesetzten Schritte (Ermittlung eines optimalen Übertragungspfades für jede Übertragungsstrecke und entsprechende Programmierung sämtlicher Netzwerkteilnehmer), sollte ein solches Gerät nicht vorgesehen sein. Ein solches Konfigurationsgerät kann nur von einem Fachmann bedient werden bzw. können die zur Konfiguration des Datennetzwerkes notwendigen Schritte nur von einem Fachmann richtig durchgeführt werden. Nicht-Fachmänner, zu welchen die meisten Heimwerker zählen, würden eine entsprechende Einschulung benötigen.

Das gesamte Funk-Datennetzwerk läßt sich daher nur schlecht im wirtschaftlich immer interessanter werdenden Do-it-yourself-Bereich einsetzen bzw. vermarkten. Die vorliegende Erfindung setzt bei diesem Manko an:

Es ist Aufgabe der vorliegenden Erfindung, ein Verfahren der eingangs angeführten Art zur Festlegung von Übertragungspfaden in einem Datennetzwerk anzugeben, welches von den Netzwerkteilnehmern selbst vollautomatisch durchgeführt werden kann.

Erfindungsgemäß wird dies dadurch erreicht, daß ein erster Teilnehmer der Übertragungsstrecke, für welche ein optimaler Übertragungspfad festgelegt werden soll, eine Suchmeldung, die zumindest seine eigene Kennzeichnung als Sender-Kennzeichnung enthält, aussendet, daß als Stationen von Übertragungspfaden verwendbare Netzwerkteilnehmer, die diese Suchmeldung empfangen, die Empfangsfeldstärke messen, der Suchmeldung ihre eigene Kennzeichnung sowie die gemessene Empfangsfeldstärke hinzufügen und die Suchmeldung erneut aussenden, daß jener Netzwerkteilnehmer, welcher der zweite Teilnehmer der Übertragungsstrecke ist, die Empfangsfeldstärke der Suchmeldung mißt und der Suchmeldung hinzufügt, aus sämtlichen empfangenen Suchmeldungen jene ermittelt, welche den hinsichtlich der Anzahl von Stationen und der Qualität der Verbindungen dieser Stationen untereinander optimalen Übertragungspfad enthält und -sofern die Suchmeldung noch keine Empfänger-Kennzeichnung enthält- seine eigene Kennzeichnung als Empfänger-Kennzeichnung hinzufügt, daß dieser zweite Teilnehmer der Übertragungsstrecke diese ermittelte Suchmeldung aussendet, daß jeder Netzwerkteilnehmer, der diese Suchmeldung empfängt und dessen Kennzeichnung in dieser Suchmeldung enthalten ist, einerseits die in der Suchmeldung vor seiner eigenen Kennzeichnung eingetragene Kennzeichnung als Kennzeichnung eines solchen Netzwerkteilnehmers, dessen Signale weiter zu senden sind, abspeichert, und andererseits die Suchmeldung erneut absendet.

Zur Durchführung dieses Verfahrens wird weder ein zusätzliches Konfigurations- oder Programmiergerät noch ein Fachmann, der die von einem solchen Gerät gesetzten Konfigurationsschritte manuell durchführt, benötigt. Das Datennetzwerk kann daher ohne Schwierigkeiten auch von Laien in Betrieb genommen werden. Der ordnungsgemäße Betrieb wird vollautomatisch selbst bei Ausfall einzelner Netzwerkteilnehmer aufrecht erhalten. Das Datennetzwerk weist damit insgesamt eine sehr hohe Funktionszuverlässigkeit und Benutzerfreundlichkeit auf.

In Weiterbildung der Erfindung kann vorgesehen sein, daß als Stationen von Übertragungspfaden verwendbare Netzwerkteilnehmer die empfangene Suchmeldung abspeichern und bei Empfang einer weiteren, vom selben ersten Teilnehmer kommenden Suchmeldung diese neue Suchmeldung mit der gespeicherten Suchmeldung vergleichen und daß sie nur dann wenn diese neue Suchmeldung einen hinsichtlich der Anzahl von Stationen und der Qualität der Verbindungen dieser Stationen untereinander besseren Übertragungspfad als die abgespeicherte Suchmeldung enthält, der neuen Suchmeldung ihre eigene Kennzeichnung sowie die gemessene Empfangsfeldstärke hinzufügen, diese neue Suchmeldung erneut aussenden und abspeichem.

Damit kann die Anzahl der im gesamten Datennetzwerk ausgesandten Suchmeldungen wirkungsvoll reduziert werden, ohne daß dabei der Ablauf des erfindungsgemäßen Verfahrens beeinträchtigt bzw. die Qualität der damit erhaltenen Ergebnisse verringert wird.

Die Erfindung wird nachstehend unter Bezugnahme auf die beigeschlossenen Zeichnungen näher erörtert. Es zeigt:
Fig.1 eine schematische Darstellung eines drahtlosen Datennetzwerkes mit einigen Übertragungsstrecken;
Fig.2 das Datennetzwerk nach Fig.1, wobei vier Übertragungsstrecken bereits konkrete Übertragungspfade zugeordnet sind und
Fig.3 das Datennetzwerk nach Fig.1 und 2, wobei vier anderen Übertragungsstrecken konkrete Übertragungspfade zugeordnet sind.

Im Rahmen der vorliegenden Beschreibung und den angeschlossenen Patentansprüchen ist unter der Bezeichnung "Übertragungsstrecke" eine Verbindung zur Datenübertragung von einem ersten Netzwerkteilnehmer zu einem zweiten Netzwerkteilnehmer zu verstehen.

Unter "Übertragungspfad" ist die Summe jener Netzwerkteilnehmer zu verstehen, über welche eine Übertragungsstrecke geleitet wird.

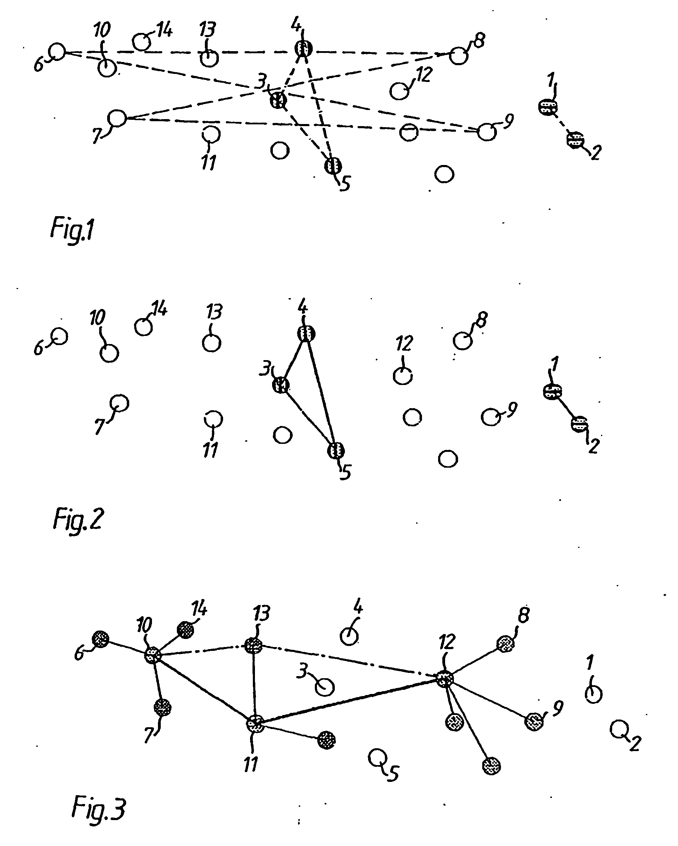

In Fig.1 sind schematisch die Teilnehmer eines Datennetzwerkes dargestellt, in welchem die Netzwerkteilnehmer 1-14 Daten drahtlos untereinander austauschen. Die vorliegende Erfindung ist unabhängig von einer bestimmten Art der drahtlosen Datenübertragung, bevorzugt werden die Daten zwar per Funk ausgetauscht, genauso wäre es aber denkbar, hiefür andere Bereiche des Frequenzspektrums, wie z.B. Ultraschall oder Infrarot einzusetzen. Letzteres ist freilich nur möglich, wenn stets eine Sichtverbindung zwischen den einzelnen Netzwerkteilnehmern 1-14 gegeben ist.

In diesem Datennetzwerk existieren mehrere Übertragungsstrecken (vgl. strichlierte Linien): Es soll von Teilnehmer 1 auf Teilnehmer 2 übertragen werden; Teilnehmer 3 soll sowohl mit Teilnehmer 4 als auch mit Teilnehmer 5 in Verbindung stehen und auch die Teilnehmer 4 und 5 sollen untereinander Daten austauschen können. Mit anderen Teilnehmern brauchen besagte fünf Teilnehmer 1-5 nicht in Verbindung stehen.

Daneben gibt es (u.a.) Teilnehmer 6 und 7, die mit den Teilnehmern 8 und 9 Daten austauschen können. Teilnehmer 6,7 und 8,9 sind aber so weit räumlich voneinander entfernt (bzw. liegen Hindernisse wie Wände, Möbel od. dgl. zwischen ihnen), daß eine direkte drahtlose Verbindung zwischen ihnen nicht möglich ist.

Wenn das dargestellte Datennetzwerk eine eingangs bereits erwähnte Gebäude-Elektroinstallation ist (worauf die Erfindung aber keinesfalls beschränkt ist), so könnte Teilnehmer 1 ein Schalter und Teilnehmer 2 die zugehörige Lampe sein; Teilnehmer 6 eine im Schaltschrank eingebaute Zeitschaltuhr und die Teilnehmer 8,9 ein Heizkörper und ein Jalousienmotor.

Es ist vorgesehen, daß jeder Netzwerkteilnehmer 1-14 des erörterten Datennetzwerkes Sende- und Empfangsfunktion aufweist. Eine vorbestimmte Anzahl von Netzwerkteilnehmern 1-14 weist weiters einen Speicher zum Abspeichern der Kennzeichnungen jener anderer Netzwerkteilnehmer, deren Signale weiter zu senden sind, auf.

Für diese Netzwerkteilnehmer 1-14 besteht die Möglichkeit, daß sie nicht nur die von ihnen erzeugten Daten absenden bzw. die für sie bestimmten Daten empfangen, sondern daß sie zwar empfangene, sie aber nicht betreffende Daten, nachdem sie diese gegebenenfalls verstärkt haben, weiter senden. Diese Netzwerkteilnehmer 1-14 können daher Stationen in einem Übertragungspfad bilden, sie können -in der EDV-Fachsprache ausgedrückt- als Router verwendet werden.

Wenn eine Übertragungsstrecke feststeht, d.h. sobald für einen Netzwerkteilnehmer bekannt ist, mit welchem anderen Netzwerkteilnehmer er Daten austauschen soll, muß entschieden werden, ob diese Übertragungsstrecke direkt sein kann, d.h. nur aus den zu verbindenden Teilnehmern selbst bestehen kann oder ob -wegen der begrenzten Reichweite der drahtlos übertragenen Signale- ein Zwischenstationen ("Router") umfassender Übertragungspfad aufgebaut werden muß.

Im Beispiel der Fig.2 und 3 können die Teilnehmer 1 und 2 bzw. 3, 4 und 5 jeweils direkt miteinander kommunizieren, jedoch müssen die Übertragungsstrecken zwischen den Teilnehmern 6,7 und 8,9 jeweils durch Router umfassende Übertragungspfade gebildet werden. Ein erster, mit durchgehender Linie dargestellter Übertragungspfad beinhaltet dabei die Netzwerkteilnehmer 10, 11 und 12; ein zweiter, ebenfalls möglicher Übertragungspfad ist durch die Netzwerkteilnehmer 10, 13 und 12 gebildet.

Die Erfindung betrifft nun ein Verfahren zur Festlegung eines solchen Übertragungspfades in einem erörterten Datennetzwerk. Das Netzwerk wird zunächst in gewünschter Weise aufgebaut, d.h. die einzelnen Netzwerkteilnehmer 1-14 werden an den vorgesehenen Orten montiert.

In bekannter Weise ist jedem Netzwerkteilnehmer 1-14 eine eindeutige Kennzeichnung, wie z.B. eine Seriennummer, zugewiesen, was durch Einspeicherung dieser Kennzeichnung in die Elektronik des jeweiligen Teilnehmers erfolgt. Dies kann zweckmäßigerweise bereits vor dem Aufbau des Netzwerkes, beispielsweise bereits vom Hersteller der Netzwerkteilnehmer 1-14, vorgenommen werden.

Eine Übertragungsstrecke, d.h. die Zuordnung zweier Netzwerkteilnehmer 1-14 zueinander wird zumindest in jenem Teilnehmer gespeichert, der als Befehlsempfänger in dieser Übertragungsstrecke arbeitet, indem dieser Teilnehmer die Kennzeichnung des ihm zugeordneten, als Befehlssender arbeitenden anderen Teilnehmers speichert. Ein Befehlsempfänger kann beispielsweise eine Lampe und der ihm zugeordnete Befehlssender kann ein Lichtschalter sein. In dieser Konstellation ist es nur für die Lampe wichtig zu wissen, die Schaltbefehle welchen Schalters sie auszuführen hat. Dem Schalter hingegen muß es nicht unbedingt bekannt sein, welche anderen Teilnehmer die von ihm ausgesandten Schaltbefehle ausführen. Dennoch ist es möglich, im ersten, als Befehlssender arbeitenden Teilnehmer die Kennzeichnung des ihm zugeordneten als Befehlsempfänger arbeitenden Teilnehmers einzuspeichern.

Die Erläuterung des erfindungsgemäßen Verfahrens erfolgt zunächst anhand einer solchen Übertragungsstrecke, bei welcher der als Befehlsempfänger arbeitende Teilnehmer den ihm zugeordneten als Befehlssender arbeitenden anderen Teilnehmer bereits "kennt", d.h. in welchen in oben erörterter Weise die Kennzeichnung des Befehlssenders bereits abgespeichert ist.

Ein erster Teilnehmer der Übertragungsstrecke, für welche ein optimaler Übertragungspfad festgelegt werden soll (z.B. der Schalter des obigen Beispiels) sendet eine Suchmeldung aus, worunter eine Nachricht zu verstehen ist, die Kennzeichnungen von Netzwerkteilnehmern sowie Empfangsfeldstärken enthalten kann. Beim Aussenden der Suchmeldung durch den ersten Teilnehmer der Übertragungsstrecke enthält sie zunächst zumindest seine eigene Kennzeichnung als Sender-Kennzeichnung. Für den Fall, daß im ersten Teilnehmer auch die Kennzeichnung des zweiten Teilnehmers dieser Übertragungsstrecke gespeichert ist, kann diese Kennzeichnung des zweiten Teilnehmers, also z.B. die Kennzeichnung des Beleuchtungskörpers des obigen Beispiels, als Empfänger-Kennzeichnung in der Suchmeldung enthalten sein.

Die Suchmeldung wird von sämtlichen, in Reichweite des ersten Teilnehmers befindlichen anderen Netzwerkteilnehmern 1-14 empfangen. Davon messen jene Netzwerkteilnehmer, die als Stationen von Übertragungspfaden verwendbar sind, die Empfangsfeldstärke der eingehenden Suchmeldung und fügen dieser ihre eigene Kennzeichnung sowie die gemessene Empfangsfeldstärke hinzu. Es entsteht damit eine modifizierte Suchmeldung, die wieder ausgesandt wird. Diese modifizierte Suchmeldung wird nun von weiteren Netzwerkteilnehmern 1-14 empfangen, welche ebenfalls in der eben erläuterten Weise vorgehen, d.h. -sofern sie als Stationen von Übertragungspfaden verwendbar sind- die Suchmeldung modifizieren und erneut aussenden.

Die Suchmeldung wird somit im gesamten Datennetzwerk verbreitet und erreicht auch den zweiten Teilnehmer der Übertragungsstrecke.

Auf diese Weise wird eine sehr große Anzahl von Suchmeldungen im Datennetzwerk versandt. Diese Datenflut kann gemäß einer bevorzugten Ausführungsform der Erfindung dadurch reduziert werden, daß nicht jede empfangene Suchmeldung erneut ausgesandt wird:

Die als Stationen von Übertragungspfaden verwendbaren Netzwerkteilnehmer speichern dazu eine Suchmeldung, die sie wieder ausgesandt haben. Wenn sie eine neue Suchmeldung empfangen, die vom selben ersten Teilnehmer stammt, wie die im Speicher befindliche frühere Suchmeldung, vergleichen sie diese neue Suchmeldung mit der alten, abgespeicherten. Nur dann, wenn diese neue Suchmeldung einen hinsichtlich der Anzahl von Stationen und der Qualität der Verbindungen dieser Stationen untereinander besseren Übertragungspfad enthält, als die im Speicher befindliche, wird die neue Suchmeldung in der erörterten Art bearbeitet (ihr also die eigene Kennzeichnung des Netzwerkteilnehmers und die gemessene Empfangsfeldstärke hinzugefügt und sie erneut abgesandt).

In aller Regel liegen zwischen den beiden Teilnehmern einer Übertragungsstrecke mehrere, d.h. aus verschiedenen Netzwerkteilnehmern 1-14 gebildete Übertragungspfade (vgl. Fig.3), sodaß den zweiten Teilnehmer auch mehrere, unterschiedliche Kennzeichnungen und Empfangsfeldstärken enthaltende Suchmeldungen erreichen.

Dieser zweite Teilnehmer mißt die Empfangsfeldstärke der Suchmeldung, fügt sie dieser hinzu und ermittelt aus sämtlichen empfangenen Suchmeldungen im nächsten Schritt des erfindungsgemäßen Verfahrens nun jene, welche den hinsichtlich der Anzahl von Stationen und der Qualität der Verbindungen dieser Stationen untereinander optimalen Übertragungspfad enthält.

Dabei ist ein Übertragungspfad dann als optimal einzustufen, wenn er so wenig Übertragungsstationen, d.h. zusätzlich zu den zu verbindenden Netzwerkteilnehmern 1-14 notwendige andere Teilnehmer umfaßt, als möglich, wobei aber gleichzeitig die verwendeten Stationen untereinander bestmögliche Verbindung, d.h. höchstmögliche Empfangsfeldstärke, aufweisen.

Die beiden Kriterien "wenige Stationen" und "bestmögliche Verbindung" werden in ein optimales Verhältnis zueinander gebracht. Dies bedeutet, daß beispielsweise eine nur geringfügige Erhöhung der Stationsanzahl, bei welcher aber eine deutlich höhere Empfangsfeldstärke zwischen den einzelnen Stationen gegeben ist, der geringeren Stationsanzahl vorgezogen wird. Genauso ist im umgekehrten Fall eine nur geringfügige Verminderung der Empfangsfeldstärke zwischen den einzelnen Stationen akzeptabel, wenn dadurch eine deutliche Reduktion der Stationsanzahl erreichbar ist.

Die am optimalen Übertragungspfad beteiligten Netzwerkteilnehmer 1-14 müssen jetzt von dieser Beteiligung noch in Kenntnis gesetzt werden, wozu der zweite Teilnehmer die ermittelte, den optimalen Übertragungspfad enthaltende Suchmeldung wieder aussendet.

Diese wird von sämtlichen in Reichweite befindlichen Netzwerkteilnehmern 1-14 empfangen. Jeder dieser Netzwerkteilnehmer 1-14, dessen Kennzeichnung in dieser Suchmeldung enthalten ist, verarbeitet die Suchmeldung in folgender Weise weiter:

Zunächst ermittelt er, die Signale welches anderen Netzwerkteilnehmers 1-14 er zufolge der in der Suchmeldung enthaltenen Kennzeichnungs-Liste als Router weiter zu senden hat. In der Liste sind die Kennzeichnungen in der Reihenfolge, in welcher die Suchmeldung vom ersten zum zweiten Teilnehmer gelaufen ist, enthalten, womit sich die Kennzeichnung jenes Teilnehmers, dessen Signale weiter zu leiten sind, vor der eigenen Kennzeichnung findet. Diese Kennzeichnung wird in einem dafür vorgesehenen Speicherbereich abgelegt.

Die Suchmeldung wird -jetzt jedoch unmodifiziert- wieder abgesandt, wodurch sie zu weiteren Netzwerkteilnehmer 1-14 gelangt, die sie bislang noch nicht empfangen haben.

Diese weiteren Netzwerkteilnehmer 1-14 gehen auch in der eben erörterten Weise vor und erkennen damit automatisch, ob sie für die aktuelle Übertragungsstrecke als Router benötigt werden und justieren sich bejahendenfalls dementsprechend automatisch.

Die Suchmeldung gelangt dadurch genau einmal (sie wird ja nur noch über den als optimal festgestellten Übertragungspfad geleitet) zum ersten Teilnehmer der Übertragungsstrecke zurück. Der Empfang der Suchmeldung wird als Abschluß der Übertragungspfad-Ermittlung angesehen.

Der bislang erörterte Verfahrensablauf geht davon aus, daß dem zweiten, als Befehlsempfänger arbeitenden Teilnehmer der Übertragungsstrecke (z.B. Beleuchtungskörper) der erste, als Befehlssender arbeitende Teilnehmer (z.B. Schalter) bekannt ist. Er kommt vor allem bei einem fertig konfigurierten, sich im Normalbetrieb befindlichen Datennetzwerk zum Einsatz und wird dann gestartet, wenn ein Teilnehmer, der einen Befehl aussendet -anhand der fehlenden Rückbestätigung- erkennt, daß sein Befehl nicht angekommen ist. Geht nach einer Wiederholung der Befehlssendung keine Rückbestätigung des zweiten Teilnehmers ein, kann davon ausgegangen werden, daß ein im aktuell verwendeten Übertragungspfad befindlicher Netzwerkteilnehmer 1-14 nicht mehr richtig arbeitet und ein anderer Übertragungspfad gefunden werden muß. Der erste Teilnehmer löst daher den erörterten Verfahrensablauf aus.

In der Praxis wird das erfindungsgemäße Verfahren weniger zur Behebung solcher Störfälle sondern bei Hinzukommen einer neuen Übertragungsstrecke, d.h. wenn ein neuer Befehlssender (z.B. neuer Schalter) und ein neuer Befehlsempfänger (z.B. neue Lampe) in das Datennetzwerk eingebaut werden, eingesetzt. Regelfall ist hierbei eine völlige Neuinstallation, bei der noch für sämtliche Übertragungsstrecken Übertragungspfade festgelegt werden müssen. Wird hier ein erster als Befehlssender arbeitender Teilnehmer erstmalig (bei einem Schalter durch Betätigung seiner Wippe) betätigt, so sendet er zunächst einen Schaltbefehl aus. Da es vorläufig noch keinen, diesem Befehlssender zugeordneten Befehlsempfänger gibt, wird keine Rückbestätigung empfangen. So wie oben bereits erläutert, veranlaßt dies den Befehlssender (nach einer erfolglosen Wiederholung der Befehlssendung) das erfindungsgemäße Verfahren einzuleiten.

Die Zuordnung des zweiten Teilnehmers zu einem ersten, neu eingebauten Teilnehmer erfolgt nun dadurch, daß dieser zweite Teilnehmer -im einfachsten Fall durch Drücken einer entsprechenden Taste- in einen Lernmodus versetzt wird. In diesem Lemmodus sucht der Teilnehmer unter sämtlichen empfangenen Suchmeldungen jene heraus, welche noch keine Empfänger-Kennzeichnung enthält. Findet er eine solche Suchmeldung, trägt er seine eigene Kennzeichnung als Empfänger-Kennzeichnung ein und sendet die Suchmeldung erneut aus. Der übrige Verfahrensablauf unterscheidet sich nicht vom oben erläuterten: Die vom ersten Teilnehmer ausgesandte Suchmeldung wird genauso im gesamten Datennetzwerk verbreitet, bis sie von einem im Lernmodus befindlichen zweiten Teilnehmer empfangen und von diesem in der erörterten Weise modifiziert und zurück gesandt wird.

Es können natürlich gleichzeitig mehrere Teilnehmer in den Lemmodus versetzt werden (beispielsweise, wenn mehrere Lampen von ein und demselben Schalter geschaltet werden sollen). Es wird für jeden dieser mehreren Teilnehmer jeweils ein optimaler Übertragungspfad gefunden.

Gelangt die Suchmeldung zum ersten Teilnehmer zurück, wird dies wieder als Abschluß der Übertragungspfad-Ermittlung angesehen. Es kann vorgesehen sein, daß der erste Teilnehmer die in der Suchmeldung enthaltene Empfänger-Kennzeichnung ausliest und sie abspeichert.

Zur Durchführung des erfindungsgemäßen Verfahrens in einem Datennetzwerk müssen nicht ausnahmslos alle Netzwerkteilnehmer 1-14 als Stationen von Übertragungspfaden verwendbar, d.h. mit Speicher zum Abspeichern der Kennzeichnungen jener anderen Netzwerkteilnehmer 1-14, deren Signale weiter zu senden sind, ausgestattet sein. Insbesondere solche Netzwerkteilnehmer 1-14, die in Randbereichen der Installation liegen (z.B. Dachbodenlampe oder im Keller montierter Schalter für das Kellerlicht im Falle einer Hausinstallation) sind aufgrund ihrer geographischen Lage ohnehin nicht gut geeignet, Signale anderer Netzwerkteilnehmer, die viel zentraler im Netzwerk liegen, weiterzuleiten. Diese brauchen daher keine Router-Eigenschaft aufweisen und nehmen nicht am erfindungsgemäßen Verfahren teil.

Nach Abschluß des erfindungsgemäßen Verfahrens ist ein Übertragungspfad für die betreffende Übertragungsstrecke festgelegt und kann diese in den Normalbetrieb übergehen.

In diesem senden die Teilnehmer der Übertragungsstrecke dem jeweils anderen Datenpakete, in denen ihre beiden Kennzeichnungen enthalten sind. Anhand dieser Kennzeichnungen können sämtliche anderen Netzwerkteilnehmer erkennen, zu welcher Übertragungsstrecke dieses Datenpaket gehört, können damit anhand ihres Speicherinhaltes überprüfen, ob sie für dieses Datenpaket als Router zu fungieren haben und das Datenpaket dementsprechend behandeln, d.h. weiter senden oder verwerfen.

## Patentansprüche

1. Verfahren zur Festlegung eines optimalen Übertragungspfades in einem Datennetzwerk, in welchem die Netzwerkteilnehmer (1-14) Daten drahtlos, vorzugsweise über Funk, entlang einer Vielzahl von Übertragungsstrecken untereinander austauschen, wobei jedem Netzwerkteilnehmer (1-14) eine eindeutige Kennzeichnung, wie z.B. eine Seriennummer zugewiesen ist und jeder Netzwerkteilnehmer (1-14) sowohl Sende- als auch Empfangsfunktion aufweist, wobei eine vorbestimmte Anzahl von Netzwerkteilnehmern (1-14) einen Speicher zum Abspeichern der Kennzeichnungen jener anderer Netzwerkteilnehmer, deren Signale weiter zu senden sind, aufweist, welche Netzwerkteilnehmer damit als Stationen von Übertragungspfaden verwendbar sind, **dadurch gekennzeichnet, daß**
ein erster Teilnehmer der Übertragungsstrecke, für welche ein optimaler Übertragungspfad festgelegt werden soll, eine Suchmeldung, die zumindest seine eigene Kennzeichnung als Sender-Kennzeichnung enthält, aussendet, daß
als Stationen von Übertragungspfaden verwendbare Netzwerkteilnehmer (1-14), die diese Suchmeldung empfangen, die Empfangsfeldstärke messen, der Suchmeldung ihre eigene Kennzeichnung sowie die gemessene Empfangsfeldstärke hinzufügen und die Suchmeldung erneut aussenden, daß
jener Netzwerkteilnehmer (1-14), welcher ein zweiter Teilnehmer der Übertragungsstrecke ist, die Empfangsfeldstärke der Suchmeldung mißt und der Suchmeldung hinzufügt, aus sämtlichen empfangenen Suchmeldungen jene ermittelt, welche den hinsichtlich der Anzahl von Stationen und der Qualität der Verbindungen dieser Stationen untereinander optimalen Übemagungspfad enthält und -sofern die Suchmeldung noch keine Empfänger-Kennzeichnung enthält- seine eigene Kennzeichnung als Empfänger-Kennzeichnung hinzufügt, daß dieser zweite Teilnehmer der Übertragungsstrecke diese ermittelte Suchmeldung aussendet, daß
jeder Netzwerkteilnehmer (1-14), der diese Suchmeldung empfängt und dessen Kennzeichnung in dieser Suchmeldung enthalten ist, einerseits die in der Suchmeldung vor seiner eigenen Kennzeichnung eingetragene Kennzeichnung als Kennzeichnung eines solchen Netzwerkteilnehmers, dessen Signale weiter zu senden sind, abspeichert, und andererseits die Suchmeldung erneut absendet.

2. Verfahren nach Anspruch 1, **dadurch gekennzeichnet, daß** als Stationen von Übertragungspfaden verwendbare Netzwerkteilnehmer (1-14) die empfangene Suchmeldung abspeichern und bei Empfang einer weiteren, vom selben ersten Teilnehmer kommenden Suchmeldung diese neue Suchmeldung mit der gespeicherten Suchmeldung vergleichen und daß
sie nur dann wenn diese neue Suchmeldung einen hinsichtlich der Anzahl von Stationen und der Qualität der Verbindungen dieser Stationen untereinander besseren Übertragungspfad als die abgespeicherte Suchmeldung enthält, der neuen Suchmeldung ihre eigene Kennzeichnung sowie die gemessene Empfangsfeldstärke hinzufügen, diese neue Suchmeldung erneut aussenden und abspeichern.

## Claims

1. A method for determining an optimal transmission path in a data network, in which the network users (1 to 14) exchange data among each other in a wireless manner, preferably via radio, along a plurality of transmission paths, with each network user (1 to 14) being assigned a unique identifier, e.g. a serial number, and each network user (1 to 14) having both a transmitting as well as receiving function, with a predetermined number of network users (1 to 14) having a memory for storing the identifiers of such other network users whose signals shall be transmitted further, which network users can thus be used as stations of transmission paths, **characterized in that** a first subscriber for the transmission path for which an optimal transmission path shall be determined sends a search message which contains at least its own identifier as the transmitter identifier, that network users (1 to 14) who can be used as stations of transmission paths and receive such search messages measure the received field strength, add their own identifier to the search message and the measured field strength, and send out the search message again, that such network user (1 to 14) who is a second subscriber of the transmission path measures the received field strength of the search message and adds the same to the search message, determines from all received search messages the one which with respect to the number of stations and the quality of the connections of these stations among each other contains the optimal transmission path and, if the search message does not contain any receiver identifier, adds its own identifier as the receiver identifier, that said second subscriber of the transmission path sends out such determined search message, that every network user (1 to 14) who receives this search message and whose identifier is contained in said search message stores on the one hand the identifier entered in the search message before its own identifier as the identifier of such a network user whose signals must be transmitted further, and on the other hand sends out the search message again.

2. A method according to claim 1, **characterized in that** network users (1 to 14) which can be used as stations of transmission paths store the received search message and upon receipt of a further search message coming from the same first subscriber compare said new search message with the stored search message, and that only when said new search report contains a transmission path which is better with respect to the number of stations and the quality of the connections of these stations among each other than the stored search message it will added its own identifier and the measured received field strength to the new search message, and will transmit such new search message again and save the same.

## Revendications

1. Procédé pour fixer une voie de transmission optimale dans un réseau de données dans lequel les participants (1-14) du réseau échangent entre eux des données sans fil, de préférence par radio, le long d'une pluralité de lignes de transmission, un identificateur tel qu'un numéro de série étant alloué à chaque participant (1-14) du réseau et chaque participant (1-14) du réseau comportant une fonction émetteur et une fonction récepteur, un nombre prédéterminé de participants (1-14) du réseau comportant une mémoire pour stocker les identificateurs d'autres participants du réseau dont les signaux doivent continuer à être émis, ces participants du réseau pouvant ainsi être utilisés comme stations de voies de transmission, **caractérisé en ce que**
un premier participant de la ligne de transmission pour laquelle on veut fixer une voie de transmission optimale émet un avis de recherche contenant au moins son propre identificateur sous forme d'identificateur d'émetteur, que
les participants (1-14) du réseau aptes à être utilisés comme stations de voies de transmission et recevant cet avis de recherche mesurent le champ récepteur, ajoutent à l'avis de recherche leur propre identificateur ainsi que le champ récepteur mesuré et émettent une nouvelle fois l'avis de recherche, que
le participant (1-14) du réseau qui est le deuxième participant de la ligne de transmission mesure le champ récepteur de l'avis de recherche et l'ajoute à l'avis de recherche, identifie à partir de tous les avis de recherche reçus celui qui contient la voie de transmission optimale en termes de nombres de stations et de qualité de connexion entre les stations et, dans la mesure où l'avis de recherche ne contient pas encore d'identificateur de récepteur, rajoute son propre identificateur sous forme d'identificateur de récepteur, que
ce deuxième participant de la ligne de transmission émet cet avis de recherche identifié, que
chaque participant (1-14) du réseau qui reçoit cet avis de recherche et dont l'identificateur est contenu dans cet avis de recherche met en mémoire l'identificateur enregistré dans l'avis de recherche avant son propre identificateur sous forme d'identificateur d'un participant du réseau dont les signaux doivent continuer à être émis d'une part, et envoie une nouvelle fois l'avis de recherche.

2. Procédé selon la revendication **1, caractérisé en ce que** des participants (1-14) du réseau aptes à être utilisés comme stations de voies de transmission mettent en mémoire l'avis de recherche reçu et à réception d'un autre avis de recherche provenant du même premier participant comparent ce nouvel avis de recherche avec l'avis de recherche mis en mémoire et que
ce n'est que lorsque ce nouvel avis de recherche contient une voie de transmission meilleure, en termes de nombre de stations et de qualité de connexion entre les stations, que l'avis de recherche mis en mémoire, que ces participants rajoutent au nouvel avis de recherche leur propre identificateur ainsi que le champ récepteur mesuré, envoient une nouvelle fois ce nouvel avis de recherche et le mettent en mémoire.
